Europäisches Patentamt

European Patent Office

Office européen des brevets

(19)

(11) **EP 1 245 945 A2**

(12) **EUROPEAN PATENT APPLICATION**

(43) Date of publication:
   **02.10.2002   Bulletin 2002/40**

(51) Int Cl.[7]: **G01N 15/14**

(21) Application number: **02252285.8**

(22) Date of filing: **28.03.2002**

(84) Designated Contracting States:
   **AT BE CH CY DE DK ES FI FR GB GR IE IT LI LU
   MC NL PT SE TR**
   Designated Extension States:
   **AL LT LV MK RO SI**

(30) Priority:   **28.03.2001   JP 2001136708**

(71) Applicant: **Sysmex Corporation
   Kobe-shi, Hyogo 651-0073 (JP)**

(72) Inventors:
   • **Sakurai, Chikako
      Hyogo 651-2137 (JP)**
   • **Jindo, Katsuhiko
      Hyogo 675-0332 (JP)**

(74) Representative: **Jump, Timothy John Simon et al
   Venner Shipley & Co.
   20 Little Britain
   London EC1A 7DH (GB)**

(54) **Particle measurement method**

(57)   A particle measurement method includes the steps of: preparing a first suspension by suspending transparent particles in water, the transparent particles including particles generating a first surface potential in contact with water, preparing a second suspension by suspending opaque fine particles in water, the opaque fine particles including particles generating a second surface potential in contact with water, the first and second potentials differing in polarity, mixing the first suspension with the second suspension so that the opaque fine particles electrostatically adhere to the transparent particles and opaque the transparent particles, irradiating light to the opaqued particles to capture an image of each opaqued particle; and analyzing the captured image.

EP 1 245 945 A2

**Description**

The present invention relates to a particle measurement method, and more particularly to a technique for capturing an image of a transparent particle to perform an image analysis of the particle.

Upon quality control of transparent particles or flakes mixed in a coating or cosmetic, it is important to measure their shape and size.

A conventional particle image analysis method which is used for the quality control utilizes a difference in brightness between a particle image and its background for digitizing (binarizing) the particle image at a predetermined threshold value to obtain a binary image to be analyzed (see, for example, Japanese Unexamined Patent Application No. HEI8-136439).

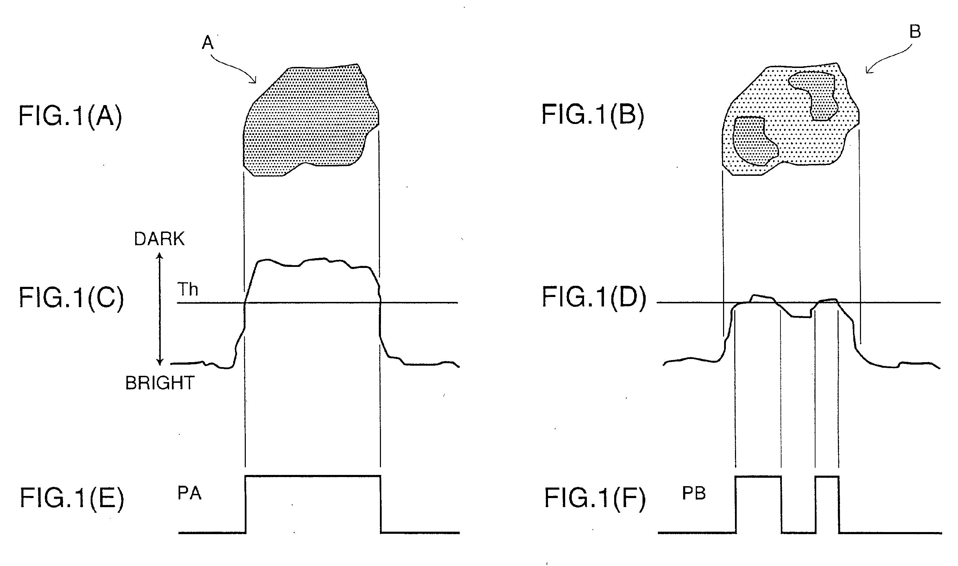

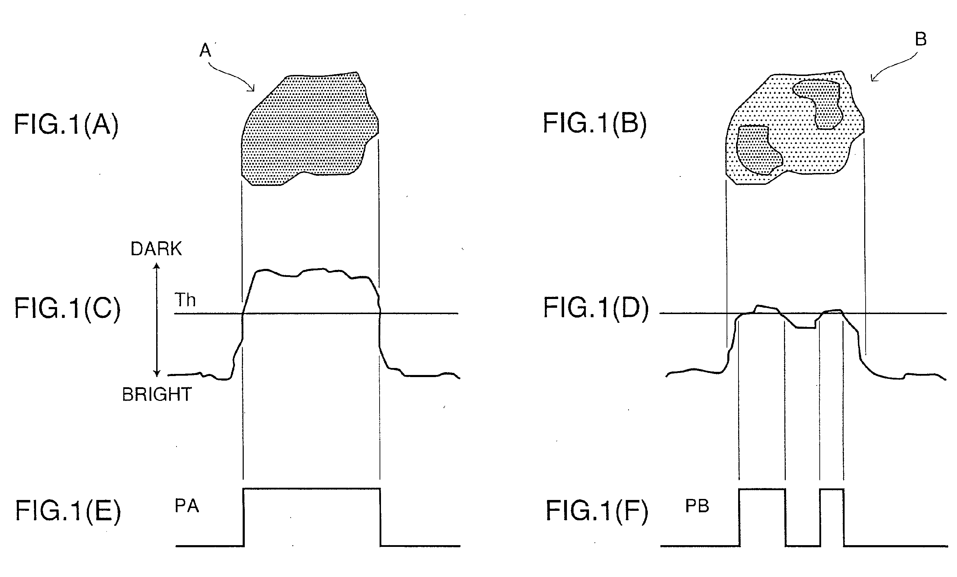

The binarization of an opaque particle and a transparent particle images will be explained here with reference to Figs. 1(A)-1(F).

A particle image A of the opaque particle as shown in Fig. 1(A) has a sufficiently great brightness signal SA with respect to a threshold value Th in Fig. 1(C). Therefore, a binarized signal PA substantially reflects an actual size of the particle as shown in Fig. 1(E).

On the other hand, a particle image B of the transparent particle as shown in Fig. 1(B) has a smaller brightness signal SB shown in Fig. 1(D). Therefore, a binalized signal PB shown in Fig. 1(F) does not reflect the actual size of the particle. As a result, the particle image B is recognized as two small-sized particles.

Accordingly, it is difficult to perform a correct image analysis for a particle having a high transparency, since the difference in brightness between the particle and its background is small.

When a glass particle is measured by using a conventional flow-type particle analyzing apparatus, a portion of profile or a portion of irregularities on a surface of a single particle in which the difference in brightness is relatively great is mistakenly recognized as a true particle image. Therefore, the following disadvantages occur in the image analysis.

(1) A portion of a single particle image is image-processed as one particle image.

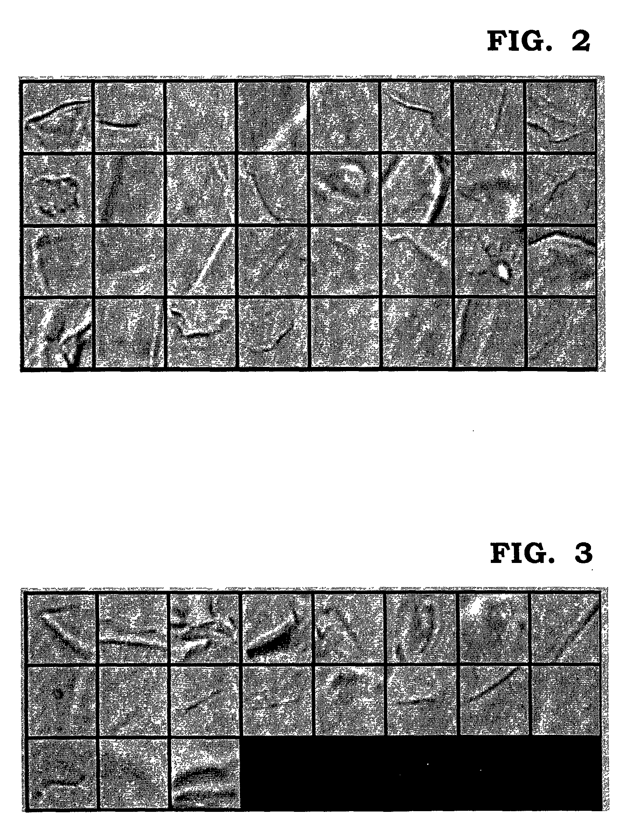

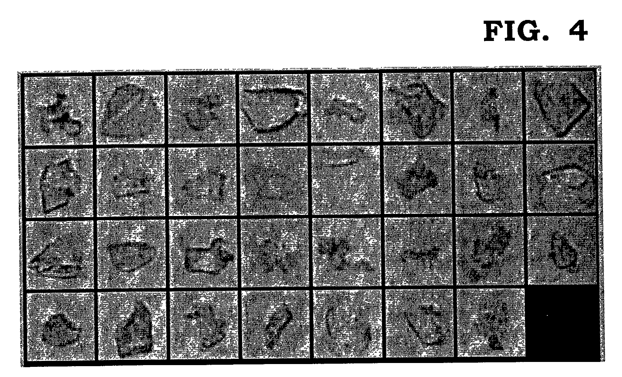

That is, almost all the images of the transparent particles as shown in Fig. 2 are recognized as linear images. These will be correctly recognized if the images are those of opaque particles as shown in Fig. 4.

(2) The particle image mistakenly recognized has an extremely low circularity.

That is, a result that almost all the images of the transparent particles are recognized as linear images brings a low circularity defined by (a perimeter of a circle having a projected area value same as the recognized particle image)/(a perimeter of the recognized particle image). The analysis result obtained by the mistakenly recognized particle images are naturally erroneous values.

The present invention is accomplished in view of the above circumstances, and aims to provide a particle measurement method wherein opaque fine particles adhere onto a transparent particle, thereby ensuring a sufficient difference in brightness between a particle image and its background in an image processing method and obtaining a correct image analysis.

The present invention provides a particle measurement method comprising the steps of preparing a first suspension by suspending transparent particles in water, the transparent particles including particles generating a first surface potential in contact with water, preparing a second suspension by suspending opaque fine particles in water, the opaque fine particles including particles generating a second surface potential in contact with water, the first and second potentials differing in polarity, mixing the first suspension with the second suspension so that the opaque fine particles electrostatically adhere to the transparent particles and opaque the transparent particles, irradiating light to the opaqued particles to capture an image of each opaqued particle, and analyzing the captured image.

BRIEF DESCRIPTION OF THE DRAWINGS

Figs. 1(A)-1(F) are views for explaining a binarization of an opaque particle image and a transparent particle image;
Fig. 2 is a view showing images of glass particles captured by a conventional method;
Fig. 3 is a view showing captured images of particles in a mixture of a glass particle suspension having pH 10 and a carbon particle suspension;
Fig. 4 is a view showing images of glass particles captured by the present invention;
Fig. 5 is a view showing a distribution of circularity of the particles shown in Fig. 2;

Fig. 6 is a view showing a distribution of circularity of the particles in the mixture of the glass particle suspension having pH 10 and the carbon particle suspension;

Fig. 7 is a view showing a distribution of circularity of particles in the glass particle suspension obtained by the method according to the present invention;

Fig. 8 is a view for explaining a construction of a flow type particle image analyzing apparatus used in the method of the present invention;

Fig. 9 is a detailed view showing an essential part of the apparatus shown in Fig. 8; and

Fig. 10 is an explanatory view for explaining an image analysis method in the apparatus shown in Fig. 8.

A particle measurement method of the present invention includes the steps of preparing a first suspension by suspending transparent particles in water, the transparent particles including particles generating a first surface potential in contact with water, preparing a second suspension by suspending opaque fine particles in water, the opaque fine particles including particles generating a second surface potential in contact with water, the first and second potentials differing in polarity, mixing the first suspension with the second suspension so that the opaque fine particles electrostatically adhere to the transparent particles and opaque the transparent particles, irradiating light to the opaqued particles to capture an image of each opaqued particle, and analyzing the captured image.

Particles or flakes of glass, acrylic resin or mica are preferably used as the transparent particles.

Fine particles of titanium oxide or carbon are preferably used as the opaque fine particles.

In the present invention, the mechanism in which the transparent particles and the opaque fine particles generate the first and second surface potentials is based on the following known phenomena A and B (see, F. KITAHARA et al., "Zeta Potential" Jan., 1995, pp. 94, SCIENTIST CO., LTD.)

A. When a particle of an inorganic oxide such as glass, titanium oxide or mica comes in contact with water, the particle is hydrated to gain an OH group inherently.

That is, a surface potential of the particle is changed by a pH of the water. For example, a particle of $SiO_2$ is represented as follows.

$$=Si \cdot OH + H^+ \Rightarrow = Si \cdot OH_2^+ + OH^-$$

$$= Si \cdot OH + OH^- \Rightarrow = Si \cdot O^- + H_2O^+H^+$$

Therefore, the particle is charged to be positive under a lower pH due to addition of the proton, while it is charged to be negative under a higher pH due to removal of the proton from the OH group.

B. A particle of acrylic resin or carbon has on its surface a phenolic group such an OH group or an acidic group such a COOH group. Thus, the particle is charged to be negative in water, but the polarity of the surface potential can not be reversed by the pH of the water.

Therefore, in the present invention, when the transparent particles in the first suspension include particles of glass or mica, the surface potential of the particles becomes positive based on phenomenon A. In this case, carbon particles are preferably used as the opaque fine particles in the second suspension, since the surface potential of the fine particles can be negative based on phenomenon B.

When the transparent particles in the first suspension include particles of acrylic resin, the surface potential of the particles becomes negative based on phenomenon B. In this case, as the opaque fine particles in the second suspension, titanium oxide particles are preferably used, since the surface potential can be positive based on phenomenon A.

Purified water is preferably used for the water in the first and second suspensions.

The surface potential of the transparent particles or the opaque fine particles may be controlled by changing the pH of the first or second suspension based on phenomenon A, if necessary. The pH of the first or second suspension may be changed by controlling the pH of the water before the particles are suspended.

A base or acid such as KOH, NaOH, $NH_3$, $CH_3COOH$, HCl or $HNO_3$ may be used for controlling the pH of the water or suspension. It is important to select such a base or acid that it does not react to the transparent particles or the opaque fine particles.

The surface potential of the particles and the fine particles here means a surface potential obtained when the particles and the fine particle are fully dispersed in the respective suspensions.

It is preferable that the transparent particles and the opaque fine particles have each a surface potential of 30 mV or more in a zeta potential measurement, the surface potential of the transparent particles being different in polarity from that of the opaque fine particles.

A commercially available zeta potentiometer using an electrophoresis method, for example, ZETASIZER (manufactured by Malvern Instruments Ltd.) can be used for measuring the zeta potential.

The transparent particle preferably has a size of about 1 to 100 microns in mean diameter.

The opaque fine particle is required to be smaller than a resolution of a conventional capturing device, so that it preferably has a size of about 50 to 200 nm in mean diameter. If the opaque fine particles are sufficiently small compared with the transparent particles, the affect given by the opaque fine particles to the size or shape of the transparent particle is fully ignored among erroneous factors in the image analysis.

The opaque particle suspension may be prepared by using commercially available carbon ink.

The step of irradiating light may utilize a pulse-emitting stroboscope or laser light source.

The capturing step may utilize a video camera that captures a general two-dimensional image.

The analyzing step may utilize a microcomputer including a CPU, ROM, RAM and I/O port or a commercially available personal computer.

The step of analyzing the image may comprise a step of binarizing the image to obtain binary image data and calculating a circularity of the particle based upon the obtained image data.

The step of irradiating light to the opaqued particles and capturing an image of each opaqued particle may include flowing the opaqued particles into a flow cell, irradiating light to the opaqued particles flowing through the flow cell, and capturing the image.

In the step of flowing the opaqued particles into the flow cell, a sheath flow cell may be utilized wherein the flow of the particle suspension is surrounded by a sheath liquid to be converted into a narrow or flat flow due to a hydrodynamic effect.

Examples

(1) Preparing a suspension of transparent glass particles to be measured.

0.10 mg of transparent glass flakes having a mean diameter of about 70 microns are dispersed in approximately 25 mL of purified water (pH: 6.5) for preparing the suspension.

(2) Preparing a suspension of opaque fine particles.

1 mL of a commercially available carbon ink (density: 0.2 wt.%, carbon particle mean diameter: 100 nm) is diluted with approximately 50 mL of purified water (pH:6.5) for preparing a carbon particle suspension.

(3) Preparing a suspension of transparent particles to which opaque fine particles adhered.

25 mL of the transparent glass particle suspension obtained at (1) is mixed with 5 mL of the carbon particle suspension obtained at (2).

(4) Measuring a zeta potential

The suspensions obtained at (1), (2) and (3) are measured by a zeta potentiometer (manufactured by Malvern Instruments Ltd.). The zeta potential of the particle suspension (1) is +41.6 mV and the zeta potential of the particle suspension (2) is -37.5 mV.

As a result of mixing the transparent glass particle suspension (1) having a zeta potential of +41.6 mV with the carbon particle suspension (2) having a zeta potential of -31.7 mV, the zeta potential of the mixed sample (3) is -33.2 mV, which is almost the same as that of the carbon particle suspension. This means that the carbon particles are electrostatically adsorbed onto each surface of the transparent glass particles by the potential difference between the glass and carbon particles, whereby the apparent potential of the transparent glass particles is replaced with the surface potential of the carbon particles. (5) Measuring with a flow-type particle image analyzing apparatus

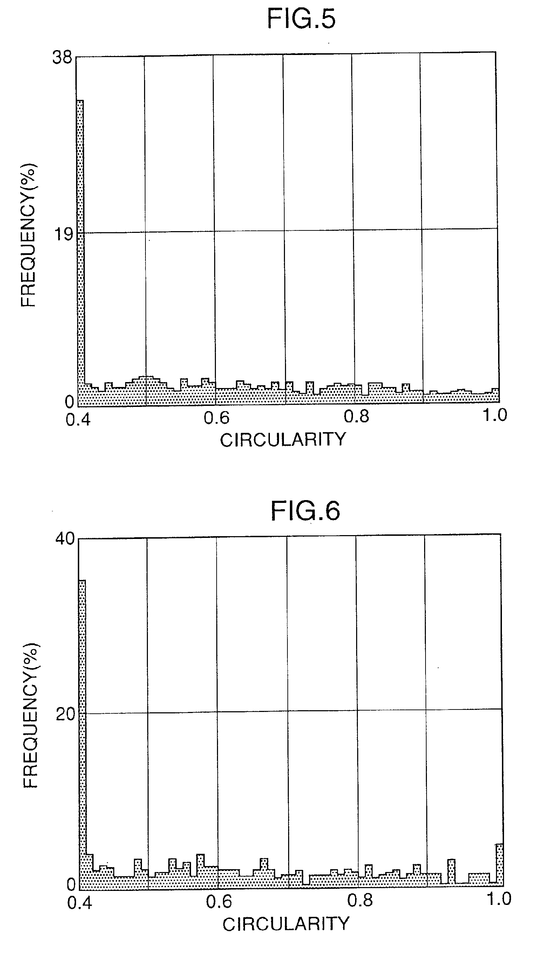

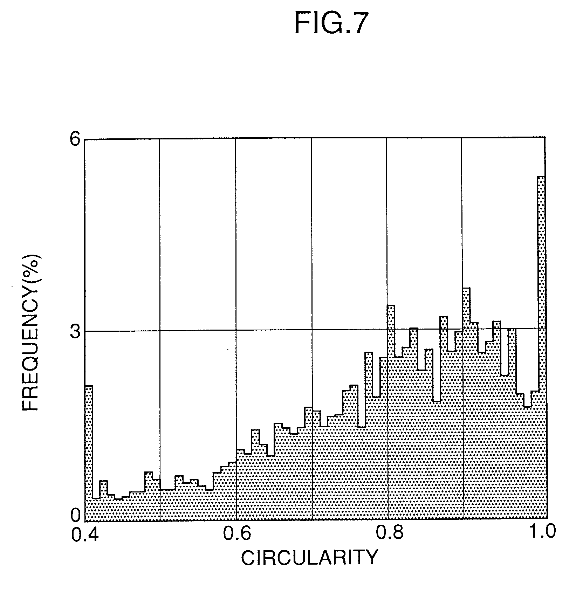

Each of the suspensions obtained at (1) and (3) is measured by a flow-type particle analyzing apparatus. The captured images are shown in Figs. 2 and 4, while the distributions of the circularity are shown in Figs. 5 and 7.

Each captured image obtained upon measuring only the transparent particle suspension of (1) has a small difference in brightness between the particle image and the background as shown in Fig. 2. Therefore, a portion of each particle image is mistakenly recognized as a single linear particle. In other words, the circularity is biasedly concentrated, as shown in Fig. 5, at the lower limit value 0.4 in the distribution of the circularity as a result of the analysis, whereby it is apparent that the particle images are mistakenly image-analyzed.

On the other hand, each captured image obtained upon measuring the mixed suspension of (3) has a great difference in brightness between the particle image and the background as shown in Fig. 4. Therefore, a whole single particle image is recognized as one particle. That is, the circularity is distributed in the area corresponding to the actual particle size in the distribution of the circularity as shown in Fig. 7, which shows that the particle images are correctly image-analyzed.

Explained so far is the particle adherence phenomena due to a surface potential by mixing a particle suspension with another particle when the one has a zeta potential reverse in polarity to that of the other. Subsequently, an experiment will be attempted in the case of adjusting the zeta potential of each particle suspension so as to have a same polarity as each other by using the above-mentioned glass and carbon particles.

(6) Preparing a transparent glass particle suspension having pH 10.

0.10 mg of transparent glass flakes having a mean diameter of about 70 microns is dispersed in approximately 25 mL of purified water, and then, adjusted to pH 10 by adding 0.1 mol of NaOH. The polarity of the zeta potential of the transparent glass particle is changed from a positive pole to a negative pole by the adjustment of pH (potential of hydrogen) due to the addition of NaOH.

(7) Preparing an opaque fine particle suspension having pH 10

1 mL of the commercially available carbon ink is diluted with approximately 50 mL of purified water, and then adjusted to pH 10 by 0.1 mol of NaOH for preparing a carbon particle suspension. The polarity of the zeta potential of the carbon particle suspension is unchanged even when the pH adjustment is performed by the addition of NaOH.

(8) Preparing a mixture of the transparent particle suspension of pH 10 and the carbon particle suspension of pH 10.

25 mL of the transparent glass particle suspension obtained at (6) is mixed with 5 mL of the carbon particle suspension obtained at (7).

(9) Measuring a zeta potential

The suspensions obtained at (6), (7) and (8) are measured by the zeta potentiometer. The zeta potential of the particle suspension (6) is -40.8 mV, the zeta potential of the particle suspension (7) is -27.0 mV and the zeta potential of the particle suspension (8) is -28.1 mV. The zeta potential of the particle suspension (8) is seemed to be replaced by the zeta potential of the particle suspension (7). This is because the number of particles in the particle suspension (7) is overwhelmingly great.

(10) Measuring with the flow-type particle image analyzing apparatus

The particle suspension (8) is measured by the flow-type particle analyzing apparatus. The captured images are shown in Fig. 3, while the circularity distribution is shown in Fig. 6.

As shown in Fig. 3, the adsorption of the carbon particles to the glass particles due to the surface potential does not occur in the particle suspension (8), so that the measurement result produced a mistaken recognition in the image processing as if the carbon particles are not mixed therein. That is, the circularity biasedly concentrated, as shown in Fig. 6, at the lower limit value 0.4 in the distribution of the circularity, whereby it is apparent that a portion of each particle image is image-analyzed as a linear particle due to a mistaken recognition of the particle images.

According to the particle measurement method of the present invention, opaque fine particles each having a surface potential reverse to that of a transparent particle to be measured adheres to the transparent particle for enabling to ensure a sufficient difference in brightness between a background and a captured particle image, whereby a correct particle image analysis can be performed.

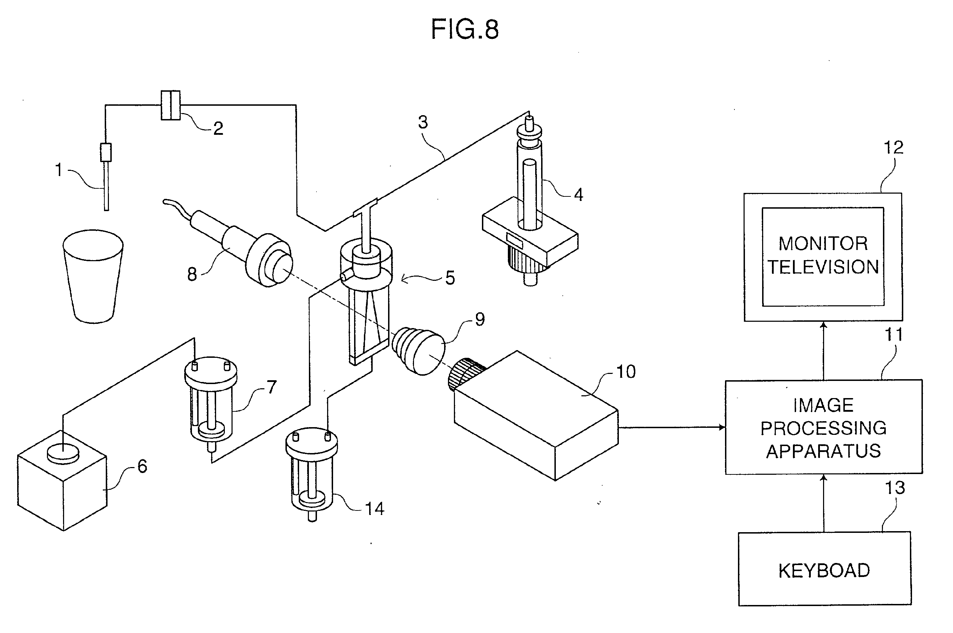

The above-mentioned flow-type particle image analyzing apparatus is explained referring to Fig. 8. In this apparatus, a particle suspension is firstly sucked from a suction pipette 1 by suction means (not shown) such as a diaphragm pump, and then, passes through a sample filter 2 to be drawn into a sample charging line 3 above a flow cell 5, as shown in Fig. 8. Oversize particles or dusts in the suspension are removed by the sample filter 2 so that the flow cell 5 having a small (narrow) flow path is not clogged up.

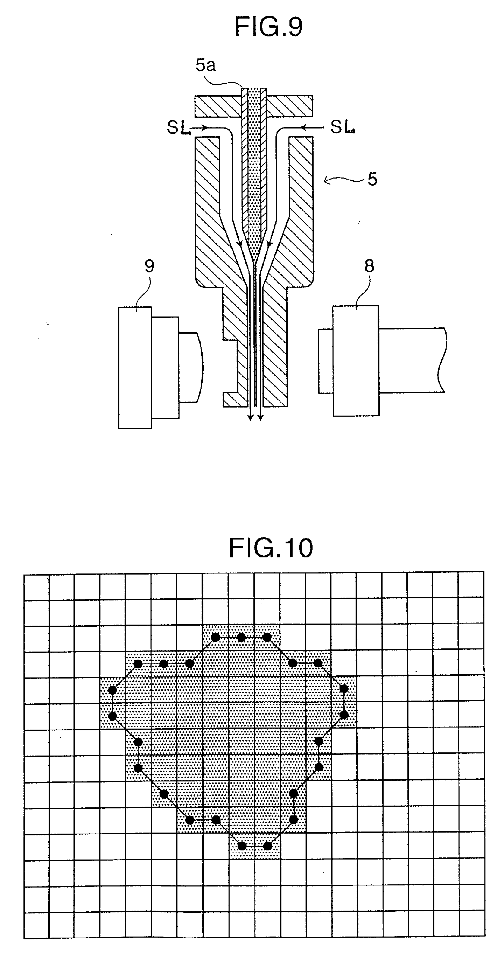

The particle suspension thus drawn into the charging line 3 is directed to the flow cell 5 by the operation of a sheath syringe 4, whereby it is squeezed little by little from a tip of a sample nozzle 5a as shown in Fig. 9. Simultaneous with this operation, a sheath liquid SL is sent from a sheath liquid bottle 6 through a sheath liquid chamber 7 into the flow cell 5, whereby the particle suspension is surrounded by the sheath liquid SL. The surrounded particle suspension flow is converged into a flat flow due to a hydrodynamic effect to be flown in the flow cell 5, and then, discharged via a waste liquid chamber 14. Pulsed light is periodically irradiated from a stroboscope 8 to the flatly converged suspension flow every 1/30 second, with the result that a static image of the particle is captured via an object lens 9 by a video camera 10 every 1/30 second.

An image signal from the video camera 10 is processed by an image processing apparatus 11 and displayed at a monitor television 12. Numeral 13 denotes a keyboard performing various operations.

The image processing apparatus 11 executes an image processing as follows. The image signal is taken into the image processing apparatus 11 to be A/D-converted as image data.

Subsequently, the image data is binarized at a suitable threshold level, and then, stored at an image memory.

Thereafter, it is determined whether an optional point of the binarized particle image shown in Fig. 10 is an edge point or not, and at the same time, a chain code is formed that is information showing which direction the edge point adjacent to the target edge point is located. Subsequently, all the edge points of the particle image are traced as shown in Fig. 10 with reference to the chain code to obtain the total pixel number, total edge number and oblique edge number of each particle image.

A projected area S and a perimeter L of each particle image are obtained from the total pixel number, total edge number and oblique edge number of each particle image.

As shown in Fig. 10, supposing an area per one pixel to be 1, the area S and the perimeter L (a length of the frame) obtained by connecting the centers of the edges located in the perimeter of the binary images are represented by the following formula:

$$\text{Area S} = \text{total pixel number} - (\text{total edge number}) \times 0.5 - 1 \tag{1}$$

$$\text{Perimeter L} = (\text{total edge number}) - (\text{oblique edge number})$$

$$+ (\text{oblique edge number}) \times (\text{square root 2}) \tag{2}$$

Subsequently, the circle equivalent diameter and the circularity are calculated using the above area S and the perimeter L. The circle equivalent diameter of a particle image is a diameter of the circle having the same area as that of the projected particle image, which is represented by the following formula (3). The circularity of a particle image is, for example, a value as defined by the following formula (4). This value is equal to 1 when the particle image is a circle. The circularity becomes small as the particle image becomes more elongate.

$$\text{Circle equivalent diameter} = \{(\text{area of the projected particle})/\pi\}^{1/2} \times 2 \tag{3}$$

$$\text{Circularity} = (\text{perimeter length of the circle having the same area}$$

$$\text{as that of the projected particle image}) /(\text{perimeter length of the particle image}) \tag{4}$$

After the circle equivalent diameter or the circularity of each particle image is obtained, a particle size distribution or circularity distribution is formed based upon the obtained value, that is then outputted to the monitor television 12.

FPIA-2100 manufactured by Sysmex Corporation can be preferably used for the above-mentioned flow-type particle image analyzing apparatus.

In preferred embodiments of the inventive method the transparent particles can include glass flakes, the opaque fine particles can include carbon particles, the first surface potential generated by the transparent particles can be positive, the second surface potential generated by the opaque fine particles can be negative, the first and second surface potentials respectively can be 30 mV or more, and the second suspension can be prepared by using a carbon ink.

The inventive method can include steps of irradiating light to the opaqued particles and capturing an image of each opaqued particle wherein said steps comprise: flowing the opaqued particles into a flow cell, irradiating the light to the opaqued particles flowing through the flow cell, and capturing the image. The step of capturing an image can be performed by using a video camera, and the step of analysing the image can comprise binarizing the image to obtain binary image data and calculating a circularity of each particle based upon the obtained binary image data. The inventive method can also comprise a step of controlling a pH of at least one of the first and second suspensions to adjust at least one of the first and second surface potentials. The polar liquid employed is the inventive methods in preferably transplant to the irradiating radiation.

**Claims**

1. A method of preparing a suspension of a particulate material in a polar liquid, comprising suspending particles of first and second solids in the liquid, wherein the particles are selected such that particles of the second solid are electrostaticially attracted to particles of the first solid and adhere to and coat the particles of the first solid.

2. A method as claimed in claim 1, wherein the particles are selected such that, when suspended alone in the polar liquid, particles of the first solid generate a surface potential of a first polarity and particles of the second solid generate a surface potential of a different or opposite polarity.

3. A method as claimed in claim 1 or claim 2, wherein particles of the second solid have a mean diameter that is equal to or less than 1/30, 1/50, 1/75 or 1/100 of the mean diameter of the particles of the first solid.

4. A method as claimed in proceeding claim, wherein particles of the second solid reflect or refract electromagnetic radiation within at least one frequency range to a greater extent than do particles of the first solid.

5. A method as claimed in claim 4, wherein particles of the second solid are relatively or substantially opaque to electromagnetic radiation within at least one frequency range at which particles of the first solid are relatively or substantially transparent.

6. A method as claimed in claim 4 or claim 5, wherein the electromagnetic radiation is ultra violet, visible or infrared light, preferably visible light.

7. A method as claimed in any preceding claim, wherein the surface potential of the particles of the first solid differs from the surface potential of the particles of the second solid, when individually suspended in the polar liquid, by at least 10, 20 or 30 mV.

8. A method as claimed in any proceeding claim, wherein the particles of the first solid have a mean diameter of 1, 10, 20, 40 or 50 - 100, 90, 95, 80 or 75μm and/or particles of the second solid have a mean diameter of 50, 70, or 90 - 120, 150, 170 or 200 nm.

9. A method as claimed in any preceding claim, wherein a suspension of particles of the first solid is mixed with a suspension of particles of the second solid to provide the suspension of the particulate solid material.

10. A method as claimed in any preceding claim, wherein the first solid is glass, a polymeric resin (preferably an acrylic resin) or mica and/or the second solid is titanium dioxide or graphite.

11. A method as claimed in any preceding claim, wherein the polar liquid is water.

12. A method as claimed in any preceding claim, wherein a pH modifying compound or compounds is dissolved in the polar liquid.

13. A method for determining a characteristic of characterising a particulate solid, comprising carrying out a method as claimed in any of the preceding claims, irradiating the resulting suspension with electromagnetic radiation and analysing or preparing an image from the electromagnetic radiation reflected by or passed through the suspension, wherein the particulate solid to be characterised is said first solid and said second solid reflects or refracts the electromagnetic radiation.

14. A method as claimed in claim 13, wherein the suspension is irradiated with electromagnetic radiation within a frequency range wherein particles of the second solid reflect or refract electromagnetic radiation to a greater extent that do particles of the first solid.

15. A method as claimed in claim 14, wherein particles of the second solid are relatively or substantially opaque and particles of the first solid are relatively or substantially transparent to the irradiating electromagnetic radiation.

16. A method as claimed in clam 14 or claim 15, wherein the irradiating electromagnetic radiation is ultraviolet, visible or infrared light, preferably visible light.

17. A suspension of a particulate material in a polar liquid, comprising particles of first and second solids suspended in the liquid, wherein the particles are selected such that particles of the second solid are electrostatically attracted to particles of the first solid and adhere to and coat the particles of the first solid.

18. A suspension as claimed in claim 17, wherein the particles of the first and second solid and the polar liquid are as defined in any of claims 1-12.

19. A suspension as claimed in 17 or claim 18, prepared or preparable by a method as claimed in any of claims 1 - 12.

20. A method as claimed in any of claims 13-16, wherein the suspension is passed into a cell wherein it is irradiated with electromagnetic radiation.

21. A method as claimed in claim 20, wherein an image is prepared from the electromagnetic radiation reflected by or passed through the suspension flowing through the cell.

22. A method as claimed in claim 21, wherein the image is formed using a video camera.

23. A method as claimed in claim 22, wherein the image is analysed and converted into a binary analogue.

24. A method as claimed in claim 23, wherein the binary analogue is employed to calculate the circularity of particles of the first solid.

25. A particle measurement method comprising the steps of:

preparing a first suspension by suspending transparent particles in water, the transparent particles including particles generating a first surface potential in contact with water;
preparing a second suspension by suspending opaque fine particles in water, the opaque fine particles including particles generating a second surface potential in contact with water, the first sand second potentials differing in polarity;
mixing the first suspension with the second suspension so that the opaque fine particles electrostatically adhere to the transparent particles and opaque the transparent particles;
irridiating light to the opaqued particles to capture an image of each opaqued particle; and
analyzing the captured image.

FIG.1(A)

FIG.1(B)

FIG.1(C)

FIG.1(D)

FIG.1(E)

FIG.1(F)

FIG.1(A)

FIG.1(B)

FIG.1(C)

BRIGHT DARK

Th

A

FIG.1(D)

B

PA

FIG.1(E)

PB

FIG.1(F)

## FIG. 2

## FIG. 3

FIG. 4

## FIG.5

## FIG.6

# FIG.7

FIG.8

EP 1 245 945 A2

# FIG.9

# FIG.10